# EUROPÄISCHE PATENTANMELDUNG

(11) **EP 4 760 225 A1**
(43) Veröffentlichungstag der Anmeldung: **17.06.2026**
(21) Anmeldenummer: 25221915.9
(22) Anmeldetag: 09.12.2025
(51) Int. Cl.: G01L 13/02, G01L 19/06

(54) **DIFFERENZDRUCKSENSOR**

(30) Priorität: 10.12.2024 DE 102024137035
(71) Anmelder: Gealan Formteile GmbH, 95145 Oberkotzau (DE); duotec GmbH, 58553 Halver (DE)
(72) Erfinder: Saunus, Christian, 08223 Grünbach (DE); Buheitel, Christian, 95111 Rehau (DE); Wisskott, Julia, 95111 Rehau (DE); Eckl, Antonia, 95111 Rehau (DE); Weber, Werner, 58553 Halver (DE)
(74) Vertreter: Fleuchaus & Gallo Partnerschaft mbB

(57) **Zusammenfassung**

Differenzdrucksensor zur Erfassung eines Druckunterschieds zwischen einem ersten in einem ersten Fluidanstandsbereich einer Messmembran anstehenden Fluid und einem zweiten in einem zweiten Fluidanstandsbereich der Messmembran anstehenden Fluid, umfassend ein Gehäuse, mit wenigstens einem ersten Anschlussbereich, zur Herstellung einer Fluidverbindung mit einem das erste Fluid aufweisende fluidführenden System und einem Aufnahmebereich welcher die Messmembran an einem Lagerbereich wenigstens abschnittsweise einfasst, wenigstens ein Sensorelement, das mit der Messmembran gekoppelt ist, um bei einer Verformung der Messmembran ein elektrisches Messsignal auszugeben, wobei das Sensorelement in einem Bereich außerhalb des ersten oder des zweiten Fluidanstandsbereichs mit der Messmembran gekoppelt ist.

## Beschreibung

### Technisches Gebiet

Die Erfindung betrifft das technische Gebiet der Druckmesstechnik. Insbesondere betrifft die vorliegende Erfindung eine Vorrichtung zur Ermittlung eines Druckunterschieds zwischen zwei fluidisch getrennten Räumen.

### Hintergrund

Druck- und Differenzdrucksensoren werden in einer Vielzahl industrieller Anwendungen eingesetzt, unter anderem in der Fluidtechnik, der Prozessmesstechnik sowie in hydraulischen, pneumatischen und chemischen Anlagen. Solche Anwendungen erfordern eine präzise und langfristig stabile Druckerfassung über breite Temperatur- und Druckbereiche hinweg. Zudem müssen die eingesetzten Sensoren kompakt, medienbeständig und zuverlässig gegenüber unterschiedlichen fluidischen Umgebungsbedingungen sein.

Im Stand der Technik ist jedoch bekannt, dass viele Drucksensorvorrichtungen empfindlich gegenüber chemisch aggressiven, korrosiven oder reaktiven Bestandteilen des gemessenen Fluids sind. Besonders bei oxidierenden, korrosiven oder chemisch aktiven Medien können die direkt mit dem Fluid in Kontakt stehenden Sensorkomponenten - etwa Membranen, mikromechanische Strukturen oder elektronische Bauteile - geschädigt werden. Typische Auswirkungen sind Materialermüdung, Korrosion, Oberflächenveränderungen, Delamination, Veränderungen mechanischer oder elektrischer Eigenschaften sowie daraus resultierende Drift und Messfehler.

Zusätzlich können unerwünschte chemische Interaktionen zu einer verkürzten Lebensdauer des Sensors, erhöhtem Kalibrierbedarf und zu einer verminderten Betriebssicherheit führen, insbesondere in sicherheitskritischen Anwendungen. Viele bekannte Differenzdrucksensoren zeigen daher eine unzureichende Langzeitbeständigkeit gegenüber anspruchsvollen Medien und sind für den dauerhaften Einsatz in aggressiven Fluiden nur eingeschränkt geeignet. Andere bekannte Differenzdrucksensoren sind nur einseitig mit einem aggressiven und/oder flüssigen Fluid beaufschlagbar. Daneben kann bei bekannten Differenzdrucksensoren die Innendruckbelastung des Mediums am Sensor zu Fehlsignalen führen, wenn diese innerhalb der druckwirkenden Fläche angeordnet sind.

### Zusammenfassung der Erfindung

Der Erfindung liegt daher die Aufgabe zugrunde, einen verbesserten Differenzdrucksensor bereitzustellen, der eine präzise, robuste und langfristig stabile Erfassung von Differenzdrücken ermöglicht, auch bei Einsatz in chemisch aggressiven oder reaktiven Fluiden. Die Vorrichtung soll eine hohe Messgenauigkeit, geringe Drift, eine hohe mediale und thermische Beständigkeit sowie eine zuverlässige Trennung der Druckräume gewährleisten. Zudem soll der Sensor eine kompakte Bauweise, geringe Herstellungskosten und eine hohe Betriebssicherheit über die gesamte Lebensdauer aufweisen sowie Montage- und Fertigungstoleranzen wirksam kompensieren können.

Diese Aufgabe wird erfindungsgemäß durch eine Vorrichtung gemäß Anspruch 1 gelöst. Vorteilhafte Ausführungsformen sind Gegenstand der Unteransprüche.

Entsprechend offenbart die vorliegende Erfindung in einem Aspekt einen Differenzdrucksensor zur Erfassung eines Druckunterschieds zwischen einem ersten, in einem ersten Fluidanstandsbereich einer Messmembran anstehenden Fluid, und einem zweiten, in einem zweiten Fluidanstandsbereich der Messmembran anstehenden Fluid, umfassend: ein Gehäuse mit wenigstens einem ersten Anschlussbereich zur Herstellung einer Fluidverbindung mit einem das erste Fluid aufweisenden fluidführenden System, und einem Aufnahmebereich. Der Aufnahmebereich ist erfindungsgemäß so ausgestaltet, dass er die Messmembran an einem Lagerbereich wenigstens abschnittsweise einfasst.

Der Aufnahmebereich kann in Ausführungsformen der vorliegenden Erfindung auf wenigstens einer der dem Lagerbereich der Messmembran zugewandten Seiten wenigstens zwei Stege aufweisen, die im montierten Zustand mechanischen Druck auf den Lagerbereich ausüben und diesen auf diese Weise fixieren und so zusammen mit dem Lagerbereich ein Widerlager für die Druckmessung zur Verfügung stellen. Vorzugsweise kann zwischen dem Aufnahmebereich und dem Lagerbereich ein Dichtmittel reversibel oder irreversibel angeordnet sein. Insbesondere kann der Kontaktbereich zwischen dem Aufnahmebereich und dem Lagerbereich mit einem klebenden Dichtmittel ausgestattet sein. In bevorzugten Ausführungsformen der vorliegenden Erfindung ist die Verbindung zwischen dem Aufnahmebereich und dem Lagerbereich fluiddicht ausgestaltet.

Erfindungsgemäß weist der Differenzdrucksensor wenigstens ein Sensorelement auf, das mit der Messmembran gekoppelt ist, um bei einer Verformung der Messmembran ein elektrisches Messsignal auszugeben. Das Sensorelement ist erfindungsgemäß in einem Bereich außerhalb des ersten oder des zweiten Fluidanstandsbereichs mit der Messmembran gekoppelt.

Ein Fluidanstandsbereich im Sinne der vorliegenden Erfindung ist der Bereich der Messmembran, auf den ein Druck durch ein Fluid wirkt, wobei das Fluid sowohl direkt auf den jeweiligen Bereich der Messmembran als auch indirekt, beispielsweise über eine Beschichtung der Messmembran oder eine an der Messmembran angeordnete Weichkomponente, wirken kann. Relevant ist hierbei der Druck des Fluids, nicht der direkte Kontakt des Fluids mit der Messmembran. Durch die Anordnung des Sensorelements außerhalb des Fluidanstandsbereich kann das Sensorelement nicht nur effektiv vom direkten Medienkontakt getrennt und damit gegebenenfalls vor chemischen Beeinflussungen geschützt werden, sondern auch vor der Innendruckbelastung des Mediums geschützt und somit etwaige Fehlsignale verhindert werden.

Durch den im jeweiligen Fluidanstandsbereich auf die Messmembran wirkenden Druck wird der druckbelastete Bereich ausgelenkt, und diese Auslenkung kann durch das an der Messmembran angeordnete Sensorelement detektiert und in ein elektrisches Signal umgewandelt werden.

In Ausführungsformen der vorliegenden Erfindung, in denen die Vorrichtung nur einen Anschlussbereich, nämlich den ersten Anschlussbereich, aufweist, kann der Differenzdrucksensor den Druckunterschied zwischen dem mit diesem ersten Anschlussbereich verbundenen fluidführenden System und dem Umgebungsdruck des Differenzdrucksensors bestimmen. Alternativ dazu kann in Ausführungsformen der vorliegenden Erfindung der Raum über dem zweiten Fluidanstandsbereich geschlossen und optional mit einem vorbestimmten, vorzugsweise über ein Ventil justierbaren Druck versehen sein.

In einer weiteren bevorzugten Ausführungsform der vorliegenden Erfindung kann das Gehäuse einen zweiten Anschlussbereich zur Herstellung einer Fluidverbindung mit einem das zweite Fluid aufweisenden fluidführenden System aufweisen. Gemäß dieser Ausführungsform können Druckdifferenzen zwischen zwei verschiedenen, mit dem Differenzdrucksensor verbundenen fluidführenden Systemen bestimmt werden.

In einer weiteren bevorzugten Ausführungsform der vorliegenden Erfindung kann das wenigstens eine Sensorelement aus einer Gruppe ausgewählt sein, die resistive Elemente, kapazitive Elemente, piezoelektrische Elemente, Dehnungsmessstreifen, Hallsensoren und dergleichen umfasst. Durch die Möglichkeit, das wenigstens eine Sensorelement aus verschiedenen Sensortypen - wie resistiven, kapazitiven oder piezoelektrischen Elementen oder Dehnungsmessstreifen - auszuwählen, kann die Sensoreinheit optimal an den jeweiligen Anwendungsfall angepasst werden. Hierdurch lassen sich Anforderungen hinsichtlich Messbereich, Genauigkeit, Dynamik, Temperaturbeständigkeit, Energieeffizienz und Medienverträglichkeit flexibel erfüllen. Je nach Einsatzfall kann die für die spezifische Druckcharakteristik und Umgebungsbedingung jeweils vorteilhafteste Sensortechnologie eingesetzt werden. Bei Verwendung eines Hallsensors kann ein diesem zugeordneter Permanentmagnet vorzugsweise außerhalb des Gehäuses angeordnet sein. Eine durch den Differenzdruck hervorgerufene Auslenkung der Messmembran bewirkt hierbei eine Relativänderung der Position des außen angeordneten Magneten gegenüber dem innerhalb des Gehäuses befindlichen Hallsensor, wodurch eine Änderung des magnetischen Flusses detektiert wird. Auf diese Weise lässt sich der Differenzdruck berührungslos und medienentkoppelt erfassen, während der Hallsensor selbst gegenüber aggressiven Medien und hohen Drücken geschützt bleibt.

In einer weiteren bevorzugten Ausführungsform der vorliegenden Erfindung kann die Membran aus einem metallischen, keramischen oder polymeren Werkstoff mit einer für die Druckmessaufgabe vorgegebenen Elastizität bestehen. Die Wahl des Membranmaterials ermöglicht eine anwendungs- und medienabhängige Optimierung der mechanischen, thermischen und chemischen Eigenschaften der Membran.

In einer weiteren bevorzugten Ausführungsform der vorliegenden Erfindung kann die Messmembran einen Rahmenbereich aufweisen. Dieser Rahmenbereich dient als mechanische Stütz- und Befestigungsstruktur und ermöglicht eine präzise definierte Montage der Membran innerhalb des Differenzdrucksensors. Dadurch können sowohl die Eigensteifigkeit der Membran als auch deren Verformungsverhalten zuverlässig eingestellt werden, was zu einer verbesserten Reproduzierbarkeit der Messwerte führt.

In einer weiteren bevorzugten Ausführungsform der vorliegenden Erfindung kann die Messmembran einen druckbelasteten Bereich aufweisen, der auf einer ersten Seite den ersten Fluidanstandsbereich und auf einer gegenüberliegenden zweiten Seite den zweiten Fluidanstandsbereich bildet. Der druckbelastete Bereich ist über mindestens einen Verbindungsbereich mit dem Rahmenbereich gekoppelt. Durch die beiden Fluide erzeugten Druckkräfte können entsprechend auf den druckbelasteten Bereich der Messmembran wirken, was zu einer Verformung des druckbelasteten Bereichs und gegebenenfalls des Verbindungsbereich führt und von dem Sensorelement detektiert werden kann. Diese Ausgestaltung stellt sicher, dass die durch die beiden Fluide erzeugten Druckkräfte kontrolliert und gleichmäßig in den Rahmen eingeleitet werden.

In einer weiteren bevorzugten Ausführungsform der vorliegenden Erfindung ist der druckbelastete Bereich, mit Ausnahme von wenigstens einem Verbindungsbereich, vom Rahmenbereich wenigstens ansatzweise entkoppelt. Zu diesem Zweck kann zwischen dem Rahmenbereich und dem druckbelasteten Bereich ein Spalt vorgesehen sein, sodass sich der druckbelastete Bereich nicht flächig am Rahmen abstützt. Alternativ dazu kann die ansatzweise Entkopplung durch eine, beispielsweise nutartige, Materialverjüngung bewirkt werden; dies hat den Vorteil, dass die Dichtigkeit der Messmembran erhalten bleibt. In beiden Fällen werden die auf den ersten oder den zweiten Fluidanstandsbereich wirkenden Druckkräfte im Wesentlichen ausschließlich über den Verbindungsbereich in den Rahmen eingeleitet und an dem Verbindungsbereich von dem Sensorelement detektiert. Dies führt zu einer gezielten elastischen Verformung des Verbindungsbereichs, während der übrige druckbelastete Bereich weitgehend frei beweglich bleibt. Durch die dadurch erhöhte mechanische Nachgiebigkeit ergibt sich eine größere Auslenkung pro anliegender Druckänderung, wodurch die Sensibilität des Differenzdrucksensors gesteigert wird. Zugleich kann die definierte Entkopplung zwischen Membran und Rahmenbereich zu einer verringerten Hysterese und einer verbesserten Reproduzierbarkeit der Messwerte beitragen, sodass insgesamt eine besonders präzise und empfindliche Detektion auch kleiner Differenzdrücke ermöglicht wird. In weiteren bevorzugten Ausführungsformen kann die Messmembran unterschiedlich ausgestaltete Abschnitte aufweisen. Entsprechend kann der Rahmenbereich dicker, und somit starr ausgebildet sind, während der druckbelastete Bereich und/oder der Verbindungsbereich dünner und somit flexibler ausgebildet sein können. Alternativ oder in Ergänzung dazu können auch verschiedenen Materialien verwendet werden, um den Druckdifferenzsensor für den jeweiligen Einsatzbereich, insbesondere hinsichtlich des zu messenden Druckbereichs zu optimieren.

In einer weiteren bevorzugten Ausführungsform der vorliegenden Erfindung kann am Rahmenbereich der Messmembran oder an einem Teil des Gehäuses einseitig oder beidseitig wenigstens ein Anschlag angeordnet sein, durch den der sich auslenkende Teil der Messmembran vor einer zu hohen Verformung über den vorgesehenen Messbereich des Differenzdrucks hinaus geschützt wird, um plastische Verformungen oder Beschädigungen der Messmembran zu vermeiden. Insbesondere kann durch einen solchen Anschlag auch eine Beschädigung einer Weichkomponentenmembran verhindert werden, indem ein übermäßiges Auslenken des druckbelasteten Bereichs der Messmembran begrenzt wird.

In einer weiteren bevorzugten Ausführungsform der vorliegenden Erfindung kann sich der Verbindungsbereich in den Aufnahmebereich hinein und/oder durch diesen hindurch erstrecken. Insbesondere kann der Aufnahmebereich im Gehäuse wenigstens über die Fläche des Verbindungsbereichs der Messmembran freigespart sein, dass sich der Verbindungsbereich bis zum. Max. anliegenden Differenzdruck auslenken kann, ohne durch die Gehäusewand vorher blockiert zu werden.

In einer weiteren bevorzugten Ausführungsform der vorliegenden Erfindung kann der Verbindungsbereich steg- oder balkenförmig ausgeführt sein. Durch die Wahl einer geeigneten Geometrie kann eine reproduzierbare elastische Nachgiebigkeit und somit eine kontrollierte Verformung des Verbindungsbereichs unter Druckbelastung bewirkt werden, wodurch das dynamische und statische Verhalten des Differenzdrucksensors präzise einstellbar wird.

In einer weiteren bevorzugten Ausführungsform der vorliegenden Erfindung kann die Messmembran gemeinsam mit wenigstens einem Abschnitt des Gehäuses den ersten und/oder den zweiten Anschlussbereich gegenüber dem Sensorelement fluiddicht abgrenzen. Dadurch wird verhindert, dass das in den Anschlussbereichen geführte Fluid mit dem Sensorelement in Kontakt tritt. Optional kann zwischen dem genannten Abschnitt des Gehäuses und der Messmembran ein Dichtelement angeordnet sein, um die Fluiddichtigkeit weiter zu verbessern und eine dauerhafte Abdichtung auch unter wechselnden Druck- oder Temperaturbedingungen sicherzustellen.

In einer weiteren bevorzugten Ausführungsform der vorliegenden Erfindung kann das Sensorelement am Rahmenbereich oder am Verbindungsbereich der Messmembran angeordnet sein. Vorzugsweise ist das Sensorelement an einem Übergangsbereich zwischen dem Rahmenbereich und dem Verbindungsbereich angeordnet, damit das Sensorelement noch Verformungen/Dehnungen aufnehmen. Durch diese Positionierung wird die durch den anliegenden Differenzdruck hervorgerufene Verformung beziehungsweise Dehnung der Messmembran besonders effizient auf das Sensorelement übertragen, sodass eine präzise Erfassung der Druckdifferenz ermöglicht wird. Gleichzeitig kann das Sensorelement außerhalb des ersten und/oder zweiten Fluidanstandsbereichs positioniert werden, wodurch es sowohl gegenüber dem anliegenden Fluid als auch gegenüber direkten Druckeinwirkungen geschützt ist und eine erhöhte Betriebszuverlässigkeit erreicht werden kann.

In einer weiteren bevorzugten Ausführungsform der vorliegenden Erfindung kann der erste und/oder der zweite Fluidanstandsbereich durch eine Weichkomponentenmembran überdeckt sein. Die Weichkomponentenmembran kann einerseits eine zuverlässige Fluiddichtigkeit zwischen dem ersten und dem zweiten Anschlussbereich gewährleisten und andererseits die Messmembran gegenüber dem in den Anschlussbereichen geführten Fluid schützen. Vorzugsweise besteht die Weichkomponentenmembran aus einem Material, das - abhängig vom jeweiligen Anwendungsfall - sowohl fluiddicht als auch gegenüber dem eingesetzten Fluid beständig ist, sodass eine dauerhafte und betriebssichere Abdichtung erreicht werden kann.

In einer Weiteren bevorzugten Ausführungsform der vorliegenden Erfindung kann die Weichkomponentenmembran den Aufnahmebereich und den Lagerbereich gegenüber dem ersten und /oder dem zweiten Fluid abdichten und so das Gehäuse und insbesondere das Sensorelement fluidicht von dem Fluid trennen.

In einer Weiteren bevorzugten Ausführungsform der vorliegenden Erfindung kann die Messmembran in der Weichkomponentenmembran gelagert werden, so dass diese von anderen Komponenten, insbesondere von Gehäuseteilen entkoppelt ist.

In einer weiteren bevorzugten Ausführungsform der vorliegenden Erfindung kann die Weichkomponentenmembran wenigstens abschnittsweise balgförmig ausgestaltet sein und/oder zumindest eine radiale Lippendichtung aufweisen. Die Lippendichtung kann sich beim Einbau radial gegen die Gehäusewand anpressen und dadurch eine zuverlässige Abdichtung gegenüber dem Druckmedium sicherstellen. Aufgrund der Elastizität des eingesetzten Materials bleiben gleichzeitig axiale Bewegungen der Membran möglich, ohne dass die Abdichtwirkung beeinträchtigt wird. Die balgförmige Gestaltung der Weichkomponentenmembran bewirkt zudem eine erhöhte axiale Nachgiebigkeit, sodass größere Hübe der Membran ermöglicht werden, ohne kritische Materialspannungen hervorzurufen. Eine solche Struktur reduziert Reibkräfte und trägt dazu bei, dass die Beweglichkeit der Membran weitgehend unabhängig von Temperatureinflüssen erhalten bleibt.

In einer weiteren bevorzugten Ausführungsform der vorliegenden Erfindung kann das erste Fluid und/oder das zweite Fluid eine Flüssigkeit sein, beispielsweise Wasser, Hydrauliköl, Schmieröl, Kühlmittel, Glykol-Wasser-Gemische oder Ähnliches. Alternativ oder zusätzlich kann das erste Fluid und/oder das zweite Fluid ein Gas sein, etwa Luft, Inertgase wie Stickstoff, Argon oder Helium, Prozessgase oder andere gasförmige Medien, die im jeweiligen Einsatzfall verwendet werden.

In einer weiteren bevorzugten Ausführungsform der vorliegenden Erfindung können in einen Differenzdrucksensor mehrere Messmembranen integriert werden. Bei Ausführung mit zwei Messmembranen ist es beispielsweise möglich, drei Druckräume p1, p2 und p3 bereitzustellen, sodass sowohl der Differenzdruck zwischen p1 und p2 als auch der Differenzdruck zwischen p3 und p2 erfasst werden kann. Durch die Anordnung mehrerer Messmembranen innerhalb eines gemeinsamen Sensorgehäuses lassen sich mehrere Differenzdruckgrößen mit nur einer kompakten Sensoreinheit bestimmen, wodurch zusätzliche Bauteile oder separate Sensoren entfallen können. Dies ermöglicht eine platzsparende, modular erweiterbare und hinsichtlich Messgenauigkeit und Funktionsintegration besonders vorteilhafte Sensorarchitektur, da die Messmembranen unter gleichen thermischen und mechanischen Bedingungen arbeiten und somit vergleichbare Differenzdrucksignale liefern.

### Kurzbeschreibung der Abbildungen

Die beiliegenden Figuren veranschaulichen beispielhafte Ausführungsformen und Anwendungen der vorliegenden Erfindung. Hierbei zeigen:
Fig. 1a und 1b zeigen eine schematische Darstellung einer erfindungsgemäßen Messmembran;
Fig. 2 zeigt einen erfindungsgemäßen Differenzdrucksensor;
Fig. 3a-3d zeigen verschiedene Ausführungsformen erfindungsgemäßer Messmembranen;
Fig. 4a-4c zeigen weitere erfindungsgemäße Messmembranen;
Fig. 5a und 5b zeigen eine erfindungsgemäße Weichkomponentenmembran;
Fig. 6 zeigt einen erfindungsgemäßen Differenzdrucksensor mit zweiteiligem Gehäuse;
Fig. 7 zeigt einen erfindungsgemäßen Differenzdrucksensor mit einteiligem Gehäuse; und
Fig. 8 zeigt einen weiteren erfindungsgemäßen Differenzdrucksensor.

### Detaillierte Beschreibung

Die vorliegende Erfindung wird nun unter Bezugnahme auf die beiliegenden Abbildungen näher beschrieben. Die Erfindung kann jedoch in vielen verschiedenen Formen verkörpert werden und sollte nicht auf die hier dargestellten Ausführungsformen beschränkt ausgelegt werden. Es sei angemerkt, dass die Figuren allgemeine Merkmale der in den jeweiligen Ausführungsformen genutzten Vorrichtungen veranschaulichen. Diese Figuren geben jedoch möglicherweise nicht die exakte Struktur oder das exakte Merkmal einer gegebenen Ausführungsform wieder. Zudem bezeichnen gleiche und/oder ähnliche Bezugszeichen in den Figuren entsprechende Teile über die verschiedenen Ansichten oder Ausführungsformen hinweg.

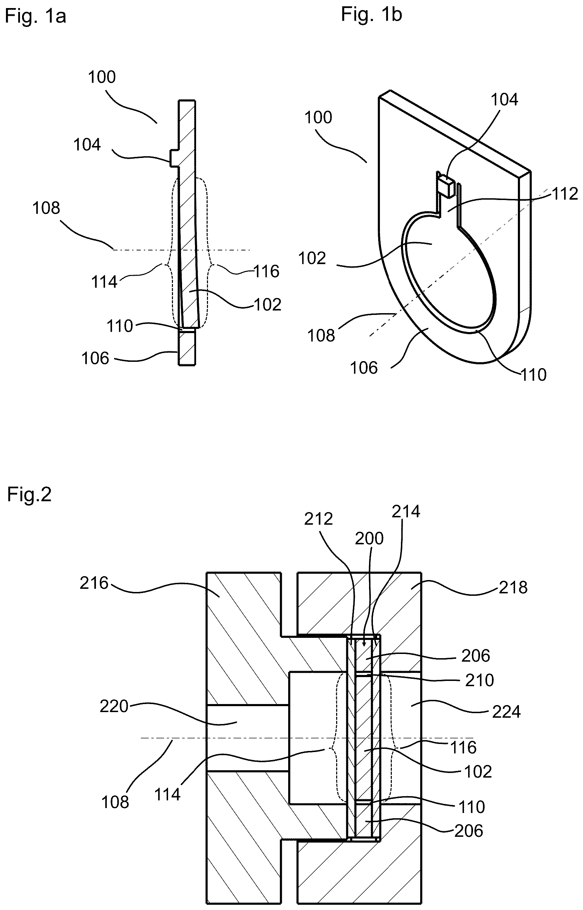

Fig. 1a und 1b zeigen schematische Darstellungen einer erfindungsgemäßen Messmembran 100. Die Messmembran 100 weist einen zentralen druckbelasteten Bereich 102 auf, der sich bei Beaufschlagung mit einem Differenzdruck elastisch auslenkt, wie in den Abbildungen gezeigt. Auf der ersten Seite dieses druckbelasteten Bereichs befindet sich ein erster Fluidanstandsbereich 114, auf der gegenüberliegenden Seite ein zweiter Fluidanstandsbereich 116. In diesen Bereichen wirkt jeweils der Druck entlang der Achse A 108 eines Fluids auf die Membran, direkt oder indirekt, sodass sich die Druckdifferenz zwischen beiden Fluiden aus der Auslenkung des druckbelasteten Bereichs 102 ergibt.

Der druckbelastete Bereich 102 ist über einen Verbindungsbereich 112 mit dem Rahmenbereich 106 der Membran 100 gekoppelt. Das Sensorelement 104 ist unmittelbar an oder auf diesem Verbindungsbereich 112 angeordnet. Zwischen dem druckbelasteten Bereich 102 und dem Rahmenbereich ist ein im Wesentlichen umlaufender Spalt 110 vorgesehen der durch den Verbindungsbereich 112 unterbrochen ist. Dieser Spalt trägt dazu bei, den druckbelasteten Bereich 102 mechanisch vom Rahmenbereich 106 zu entkoppeln, wodurch die Verformung gezielt im Verbindungsbereich 112 konzentriert wird.

Der Verbindungsbereich 112 dient somit als definierter mechanischer Kopplungsbereich zwischen dem großflächigen ausgestalteten druckbelasteten Bereich 102 und dem Sensorelement 104. Dadurch wird die im druckbelasteten Bereich 102 auftretende Kraft in eine elastische Verformung des Verbindungsbereichs 112 und insbesondere die auftretende Dehnung im Verbindungsbereich 112 konzentriert und an dieser Stelle von dem Sensorelement 104 detektiert.

Durch das Verhältnis zwischen der relativ großen Fläche des druckbelasteten Bereichs 102 und der vergleichsweise kleinen Querschnittsfläche des Verbindungsbereichs 112 ergibt sich eine besonders hohe Empfindlichkeit des Druckdifferenzsensors. Selbst geringe Druckänderungen erzeugen aufgrund dieser geometrischen Verstärkung eine messbare Dehnung bzw. Auslenkung am Sensorelement 104. Dadurch wird eine Detektion auch schwacher Druckdifferenzen ermöglicht.

Der äußere Bereich der Messmembran 100 weist einem Lagerbereich auf, der eine definierte Einspannung der Messmembran 100 gewährleistet und somit eine reproduzierbare Verformungscharakteristik sicherstellt. Im montierten Zustand wirken die Kräfte entlang der Achse A 108 auf den druckbelasteten Bereich 102, jeweils auf den Fluidanstandsbereich 114 und den Fluidanstandsbereich 116.

Durch eine Variation der Geometrie des Verbindungsbereichs 112 - beispielsweise dessen Länge, Breite, Wandstärke oder Material - sowie Variation der Form und Größe der druckbelasteten Bereich 102 kann der Messbereich an unterschiedliche Anwendungen angepasst werden. Eine Verringerung der Steifigkeit des Verbindungsbereichs führt zu einer erhöhten Empfindlichkeit, während eine Verstärkung des Verbindungsbereichs größere Messbereiche oder höhere Belastbarkeit ermöglicht. Gleichermaßen kann durch Vergrößerung der Fläche des druckbelasteten Bereichs 102 die Empfindlichkeit erhöht beziehungsweise durch dessen Verkleinerung reduziert werden.

Fig. 2 zeigt die Integration einer erfindungsgemäßen Messmembran 200 in ein zweiteiliges Gehäuse, bestehend aus einem ersten Gehäuseteil 216 und einem zweiten Gehäuseteil 218, wodurch gemeinsam ein Differenzdrucksensor gebildet wird. Die Messmembran 200 ist im Lagerbereich 206 vom Aufnahmebereich des Gehäuses gehalten und trennt mit ihrem druckbelasteten Bereich 102 den Bereich des ersten Druckanschlusses 220 von dem Bereich des zweiten Druckanschlusses 224. Ein Differenzdruck zwischen einem am ersten Fluidanstandsbereich 114 und einem am zweiten Fluidanstandsbereich 116 anstehenden Fluid kann über die entsprechende Auslenkung des druckbelasteten Bereichs 102 detektiert und bestimmt werden.

Beidseitig des druckbelasteten Bereichs 102 sind eine erste Weichkomponentenmembran 212 und eine zweite Weichkomponentenmembran 214 angeordnet. Diese bestehen aus einem elastischen, medienbeständigen Material und übernehmen gleichzeitig die Abdichtung der Druckanschlüsse untereinander sowie gegenüber den Gehäusewänden; wodurch ein fluiddichter Gehäuseinnenraum gebildet werden kann. Beim Fügen der beiden Gehäuseteile können die Weichkomponentenmembranen 212, 214 leicht komprimiert werden, sodass sich eine dauerhafte und hermetische Abdichtung ausbildet, ohne dass starre Reibkontakte entstehen. Die Elastizität der Weichkomponentenmembranen 212, 214 stellt sicher, dass sich die Messmembran 200 in axialer Richtung nahezu frei bewegen kann und nur minimal durch Querkräfte beeinflusst wird. Zugleich wirkt die elastische Vorspannung kompensierend gegenüber temperaturbedingten Dimensionsänderungen.

Über den ersten Druckanschluss 220 und den zweiten Druckanschluss 224 wird das jeweilige Fluid mit seinem entsprechenden Druck in den Differenzdrucksensor eingeleitet beziehungsweise an diesen angeschlossen. Die Druckübertragung erfolgt über die Weichkomponentenmembranen 212, 214 auf den druckbelasteten Bereich 102 der Messmembran 200 und führt zu einer Auslenkung des Verbindungsbereichs 112, an dem das Sensorelement 104 angeordnet ist. Auf diese Weise wird die Druckdifferenz zwischen den beiden fluidführenden Systemen präzise messbar.

Zwischen dem druckbelasteten Bereich 102 der Messmembran 200 und dem angrenzenden Rahmenbereich ist ein umlaufender Spalt 110 vorgesehen, der vom Verbindungsbereich 112 unterbrochen wird. Dieser Spalt bewirkt eine gezielte mechanische Entkopplung der Membran vom Gehäuse, sodass die Verformung im Wesentlichen konzentriert über den einzigen Verbindungsbereich erfolgt. Da der druckbelastete Bereich 102 großflächig ausgeführt ist, während der Verbindungsbereich eine deutlich kleinere Querschnittsfläche besitzt, führt das Verhältnis beider Bereiche zu einer hohen mechanischen Verstärkung. Dadurch können bereits geringe Druckänderungen zu gut detektierbaren Dehnungen am Verbindungsbereich führen, was eine hohe Empfindlichkeit des Differenzdrucksensors ermöglicht. Durch eine Anpassung der Geometrie oder Steifigkeit des Verbindungsbereichs und/oder des druckbelasteten Bereichs 102 kann der Empfindlichkeitsgrad beziehungsweise der Messbereich des Sensors gezielt variiert werden.

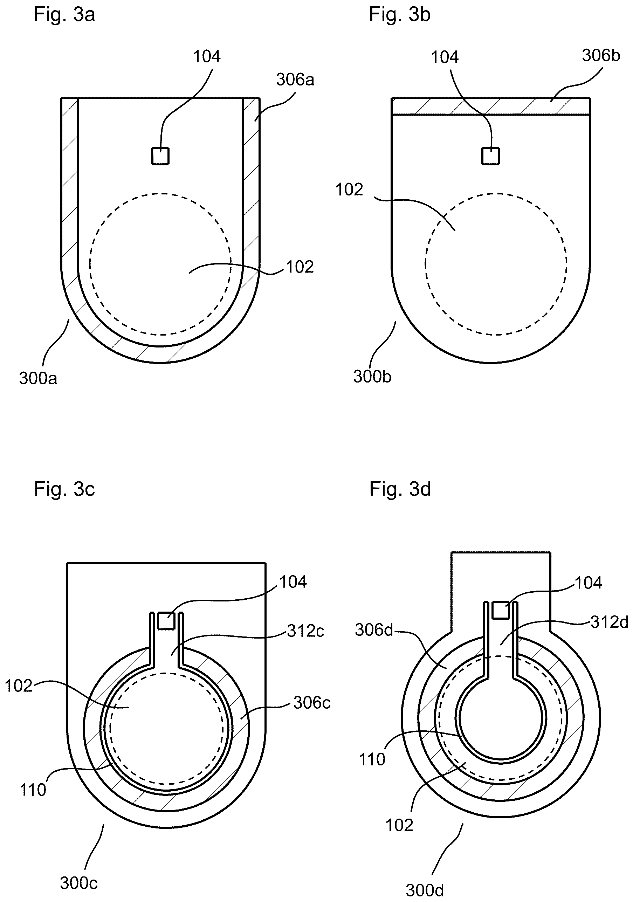

Fig. 3a bis 3d zeigen schematische Darstellungen verschiedener Ausführungsformen erfindungsgemäßer Messmembranen.

Fig. 3a zeigt eine Aufsicht einer Ausführungsform einer erfindungsgemäßen Messmembran 300a. Die Messmembran 300a weist einen zentral angeordneten druckbelasteten Bereich 102 sowie einen Rahmenbereich auf, an dem das Sensorelement 104 angeordnet ist. Weiterhin besitzt die Messmembran 300a einen teilweise umlaufenden Lagerbereich 306a, der der Aufnahme und Fixierung im Aufnahmebereich eines Gehäuses dient. Durch diese Fixierung ist die Messmembran im äußeren Bereich gehalten, sodass die elastische Auslenkung definiert ausschließlich im inneren, druckbelasteten Bereich erfolgt.

Fig. 3b zeigt eine Aufsicht einer weiteren Ausführungsform einer erfindungsgemäßen Messmembran 300b. Auch diese Ausführungsform umfasst einen zentral angeordneten druckbelasteten Bereich 102 und einen Rahmenbereich, an dem das Sensorelement 104 angeordnet ist. Die Messmembran 300b weist jedoch einen hinter dem Sensorelement angeordneten Lagerbereich 306b zur Montage im Aufnahmebereich eines Gehäuses auf. Durch diese Lagerung wird die Messmembran 300b im Gehäuse fixiert, sodass die Auslenkung wiederum definiertermaßen nur im inneren druckbelasteten Bereich 102 stattfinden kann.

Fig. 3c zeigt eine Aufsicht einer weiteren Ausführungsform einer erfindungsgemäßen Messmembran 300c, bei der ein Verbindungsbereich 312c als Anbindungs- bzw. Biegebereich vorgesehen ist. Ein umlaufender Spalt 110 trennt den druckbelasteten Bereich 102 vom äußeren Rahmenbereich und bewirkt eine gezielte mechanische Entkopplung. Der Spalt trägt dazu bei, dass sich die Verformung des druckbelasteten Bereichs im Wesentlichen auf den einzigen Verbindungsbereich 312c konzentriert. Die Geometrie des Verbindungsbereich 312c beeinflusst hierbei unmittelbar die Empfindlichkeit, die Linearität sowie die maximal zulässige Druckbelastbarkeit der Messmembran. Der Lagerbereich 306c schließt hierbei an den Spalt 110 und folgt diesem in dem Bereich des druckbelasteten Bereichs 102.

Fig. 3d zeigt eine weitere Ausführungsform einer erfindungsgemäßen Messmembran 300d. Die Fluidanstandsbereiche sind hierbei größer als der druckbelastete Bereich 102, der durch den Spalt 110 begrenz wird. Hierdurch wird der an den Fluidanstandsbereichen anstehende Druck nur partiell, d.h. nur auf einer Teilfläche gemessen. Diese Ausführungsform eignet sich insbesondere für Anwendungen mit hohen Überdrücken oder dynamischen Druckbelastungen, bei denen eine erhöhte Robustheit erforderlich ist.

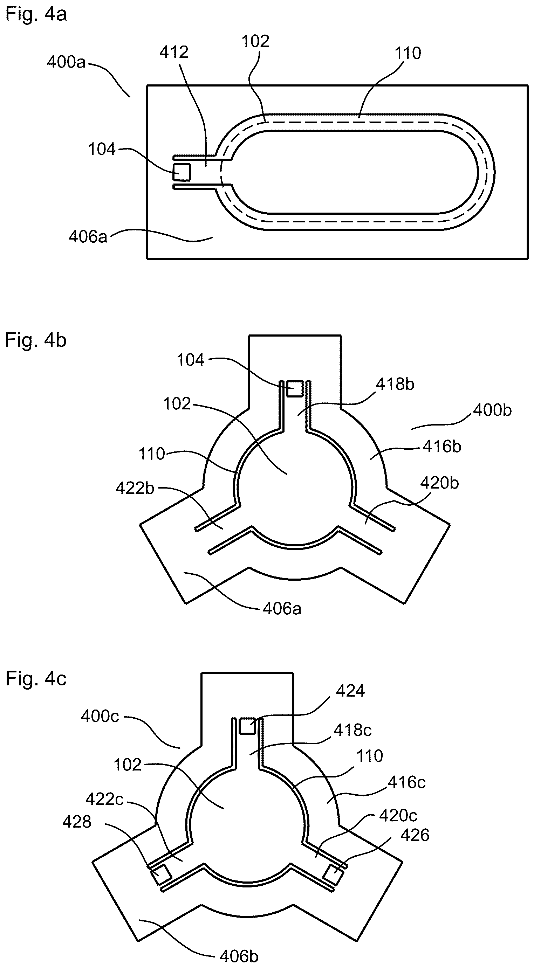

Fig. 4a bis 4c zeigen schematische Darstellungen verschiedener weiterer Ausführungsformen erfindungsgemäßer Messmembranen.

Fig. 4a zeigt eine Ausführungsform einer erfindungsgemäßen Messmembran 400a mit einem langgestreckten druckbelasteten Bereich 102, einem Sensorelement 104, einem Lagerbereich 406a, einem umlaufenden Spalt 110 sowie einem langgestreckten Verbindungsbereich 412. Die Messmembran 400a besitzt eine nicht kreisrunde, elongierte Geometrie, wodurch ein verlängerter Hebelweg entsteht und der Verbindungsbereich 412 auch bei vergleichsweise geringen Drücken ausgelenkt wird. Dadurch eignet sich diese Ausführungsform besonders für Anwendungen mit hohem Empfindlichkeitsbedarf oder begrenztem Bauraum.

Fig. 4b zeigt eine weitere Ausführungsform einer erfindungsgemäßen Messmembran 400b mit einem runden druckbelasteten Bereich 102, einem Sensorelement 104, einem Lagerbereich 406b, einem Spalt 110, einem äußeren Rahmen 416b sowie drei voneinander beabstandeten Verbindungsbereichen 418b, 420b und 422b. In dieser Ausführungsform ist der innere, druckbelastete Bereich 102 über drei radial angeordnete Anbindungen mit dem äußeren Rahmen gekoppelt, sodass eine mechanische Struktur entsteht, die funktional einem Dreiarm-Federmechanismus ähnelt. Diese Anordnung ermöglicht eine zentrierte und kontrollierte Auslenkung des inneren Bereichs und verleiht der Membran eine hohe Stabilität, wodurch sie insbesondere für Messungen höherer Drücke geeignet ist.

Fig. 4c zeigt eine Ausführungsform einer erfindungsgemäßen Messmembran 400c, die ebenfalls über drei Verbindungsbereiche 418c, 420c und 422c mit einem äußeren Rahmen 416b verbunden ist und einen Lagerbereich 406c sowie einen umlaufenden Spalt 110 aufweist. Zusätzlich sind entlang der drei Verbindungsbereiche drei Sensorelemente 424, 426 und 428 angeordnet. Durch die verteilte Anordnung mehrerer Sensorelemente entlang der radialen Anbindungsstege wird eine Mehrpunktdetektion ermöglicht, die verschiedene Vorteile bietet. Die Membran kann dadurch Temperaturdriften kompensieren, asymmetrische Belastungen oder Torsionsanteile erkennen und für sicherheitskritische Anwendungen redundante Messsignale bereitstellen. Der umlaufende Spalt 110 trennt erneut den druckbelasteten Bereich 102 vom äußeren Lagerbereich und trägt zu einer definierten mechanischen Entkopplung sowie zu einer wohldefinierten Verformungscharakteristik bei.

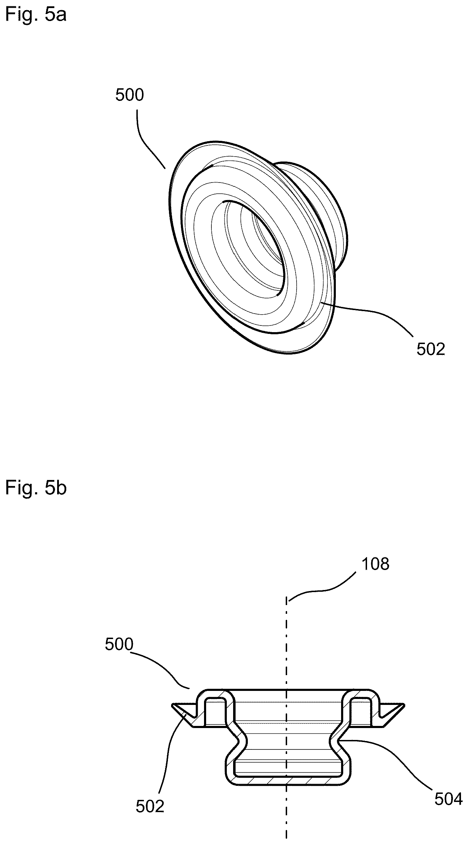

Fig. 5a und 5b zeigen Ansichten einer erfindungsgemäßen Weichkomponentenmembran 500.

Fig. 5a zeigt die Weichkomponentenmembran 500, die mit einer umlaufenden radialen Lippendichtung 502 versehen ist. Beim Einbau presst sich die radiale Lippendichtung 502 elastisch gegen die Innenwand des Gehäuses und gewährleistet dadurch eine zuverlässige Abdichtung gegenüber dem anstehenden Druckmedium. Aufgrund der Elastizität des verwendeten Materials kann sich die Weichkomponentenmembran 500 dennoch axial bewegen, ohne dass die Abdichtwirkung beeinträchtigt wird.

Fig. 5b zeigt eine weitere Ansicht der erfindungsgemäßen Weichkomponentenmembran 500, bei der zusätzlich zur radialen Lippendichtung 502 eine Balgstruktur 504 entlang der Achse A 108 zu sehen ist. Die Balgstruktur 504 erhöht die axiale Nachgiebigkeit der Membran und erlaubt größere Membranhübe, ohne dass kritische Materialspannungen entstehen. Gleichzeitig bleibt die radiale Dichtfunktion der Lippendichtung vollständig erhalten. Durch die Kombination aus Lippendichtung und Balgstruktur kann die Weichkomponentenmembran Fertigungs- und Montagetoleranzen besonders gut kompensieren und etwaige Vibrationen weitgehend entkoppeln. Zudem trägt die elastische Auslegung der Struktur zur temperaturunabhängigen Beweglichkeit und damit zu einer dauerhaft stabilen Abdichtung unter unterschiedlichen Betriebsbedingungen bei.

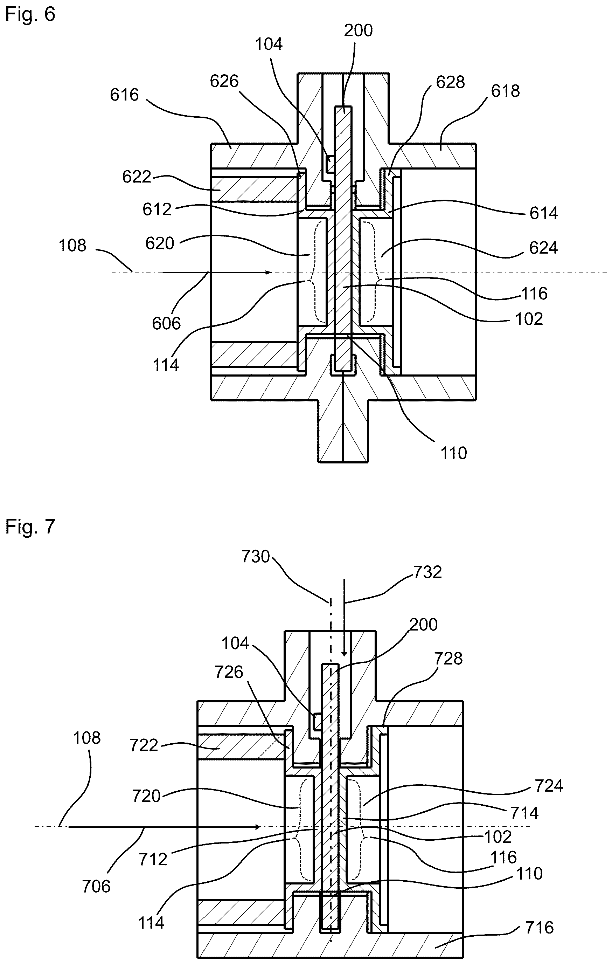

Fig. 6 zeigt einen Differenzdrucksensor mit einem zweiteiligen Gehäuse, bestehend aus einem ersten Gehäuseteil 616 und einem zweiten Gehäuseteil 618. Die beiden Gehäuseteile werden im Rahmen der Montage zusammengefügt, sodass die Messmembran 200 während des Schließvorgangs zwischen den beiden Gehäusehälften 616, 618 eingespannt wird. Der Aufnahme Bereich kann hierbei mit Stegen und/oder zusätzlichen Dichtelementen versehen werden.

In der Darstellung ist die Messmembran 200 ist im Bereich ihres äußeren Randabschnitts auf einer Seite durch eine axiale Verpressung 626 und auf der anderen Seite durch eine radiale Verpressung 628 mechanisch fixiert; beide Fixierungsmethoden sind alternativ oder auch in Kombination möglich. Diese Verpressungen gewährleisten eine form- und lagestabile sowie wenigstens abschnittsweise fluiddichte Einspannung der Membran, während gleichzeitig die Möglichkeit der elastischen Auslenkung des druckbelasteten Bereichs 102 gewährleistet ist.

Beiderseits der Messmembran 200 befinden sich eine erste Weichkomponentenmembran 612 und eine zweite Weichkomponentenmembran 614. Diese werden in Montagerichtung 606 in das teilweise geöffnete Gehäuse eingelegt und beim Zusammenfügen der beiden Gehäuseteile mit eingespannt. Die Weichkomponentenmembranen übernehmen die axiale und/oder radiale Abdichtung zwischen den Druckräumen und ermöglichen gleichzeitig einen mechanisch entkoppelten Drucktransfer auf den druckbelasteten Bereich 102 der Messmembran 200.

Über den ersten Druckanschluss 620 und den zweiten Druckanschluss 624 werden die zugehörigen Druckräume befüllt. Ein Adapterstück 622 ist am ersten Druckanschluss 620 angeordnet, zur Anpassung an unterschiedliche Anschlussgeometrien. Am zweiten Druckanschluss 624 kann je nach Bedarf ebenfalls ein Adapterstück angeordnet sein. Die in den Druckräumen anstehenden Fluide beaufschlagen über die Fluidanstandsbereiche 114 und 116 den druckbelasteten Bereich der Messmembran 200, dessen Auslenkung anschließend vom Sensorelement 604 detektiert wird.

Der zweiteilige Gehäuseaufbau ermöglicht es, die Messmembran 200 und die Weichkomponentenmembranen 612, 614 während des Fügeprozesses präzise zu positionieren und zuverlässig abzudichten. Dabei entfällt die Notwendigkeit, die Messmembran in ein bereits geschlossenes Gehäuse einzuführen; stattdessen wird sie beim Zusammenfügen der Gehäusehälften form- und kraftschlüssig, sowie wenigstens abschnittsweise fluiddicht eingespannt. Dies erleichtert den Montageprozess, reduziert geometrische Einschränkungen durch den Bauraum und erlaubt eine wirksame Kompensation von Fertigungs- und Montagetoleranzen.

Fig. 7 zeigt eine alternative Ausführungsform, bei der die Messmembran 200 in einem einteiligen Gehäuse 716 untergebracht ist. Im Unterschied zur Ausführungsform gemäß Fig. 6 kann die Messmembran hier nicht durch das Schließen zweier Gehäusehälften eingespannt werden. Stattdessen wird sie in Montagerichtung 732 in das Gehäuse 716 eingeschoben.

Die Messmembran 200 wird hierzu entlang der Montagerichtung 732 entlang der Achse B 730 in das Innere des einteiligen Gehäuses 716 eingeführt. Das Gehäuse 716 weist dafür üblicherweise eine axial orientierte Einführöffnung auf, die nach der Montage verschlossen oder durch weitere Komponenten, wie etwa einen Prozessanschluss, abgedichtet wird.

Nach dem Einschieben wird die Messmembran 200 innerhalb des Gehäuses durch eine axiale Verpressung 726 und/oder eine radiale Verpressung 728 fixiert. Diese Verpressungen können beispielsweise durch das Einpressen eines Halteringes, durch Kunststoffumspritzung, formschlüssige Gehäuseschultern oder andere geeignete Fixiermechanismen erzeugt werden. Dadurch wird die Messmembran 200 form- und lagestabil gehalten, während gleichzeitig ihre elastische Auslenkbarkeit im druckbelasteten Bereich 102 erhalten bleibt. Alternativ dazu kanndie Messmembran 200 schwimmend gelagert sein, z.B. nur durch eine Verliersicherung entgegen der Motagerichtung gehalten werden. Die Weichkomponentenmembranen verpressen sich in dieser Ausführungsform gegen das Gehäuse nicht jedoch gegen die Messmembran.

Analog zur Ausführungsform gemäß Fig. 6 sind auch hier eine erste Weichkomponentenmembran 712 und eine zweite Weichkomponentenmembran 714 vorgesehen, die in Montagerichtung 706 in das Gehäuse eingebracht werden. Sie übernehmen die Abdichtung der Druckräume und ermöglichen gleichzeitig einen mechanisch entkoppelten Drucktransfer zur Messmembran 200.

Das einteilige Gehäuse 716 weist einen ersten Druckanschluss 720 sowie einen zweiten Druckanschluss 724 auf. Ein Adapterstück 722 ist am ersten Druckanschluss 720 angeordnet sein, um unterschiedliche Anschlussgeometrien oder Verbindungstypen zu realisieren. Gleichermaßen kann auch am zweiten Druckanschluss 724 ein entsprechendes Adapterstück angeordnet werden. Über die beiden Druckanschlüsse 720, 724 werden die Druckräume befüllt, deren Fluide über die entsprechenden Fluidanstandsbereiche 114, 116 die druckbelastete Fläche 102 der Messmembran 200 beaufschlagen, deren Auslenkung wiederum durch das Sensorelement 104 detektiert werden kann.

Ein technischer Vorteil dieser Ausführungsform liegt in der hohen strukturellen Robustheit eines einteiligen Gehäuses 716, da keine trennenden Fugen oder Gehäuseverbindungen vorhanden sind, die die Dichtheit beeinträchtigen könnten. Das Einschieben der Messmembran 200 erfordert jedoch geeignete Führungs- und Fixierstrukturen, die eine präzise Positionierung ermöglichen. Insgesamt ist dieses System besonders geeignet für Anwendungen mit hohen medialen Belastungen oder mit Anforderungen an eine absolute Dichtheit.

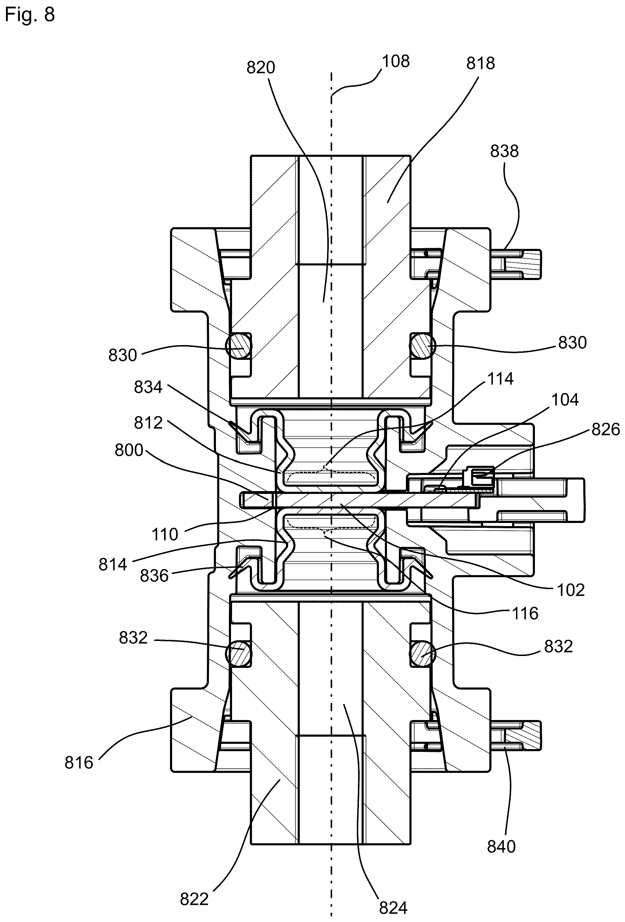

Fig. 8 zeigt einen vollständig montierten Druckdifferenzsensor, in welchem die Messmembran 200 in ein einteiliges Gehäuse 816 integriert und mit sämtlichen Prozessanschlüssen, Abdichtelementen und der elektronischen Auswerteeinheit kombiniert ist.

Im Zentrum der Darstellung befindet sich die Messmembran 800. Diese trennt zwei getrennte Druckräume voneinander und Druckbelastung über die Fluidanstandsbereiche 114, 116 werden über den druckbelasteten Bereich 102 auf das angeordnete Sensorelement 104. Die Messmembran 800 ist so ausgeführt, dass sie eine reproduzierbare elastische Auslenkung im druckbelasteten Bereich 802 ermöglicht, während ihr äußerer Randbereich innerhalb der Gehäusestruktur gehalten ist. Ein umlaufender Spalt 810 unterstützt die definierte mechanische Entkopplung zwischen dem druckbelasteten Bereich und dem Rahmenbereich der Membran sowie die Konzentrierung der auf den druckbelasteten Bereich 102 wirkenden Kräfte auf den Verbindungsbereich.

Beidseitig der Messmembran sind eine erste Weichkomponentenmembran 812 und eine zweite Weichkomponentenmembran 814 angeordnet. Diese bestehen aus einem elastischen und vorzugsweise medienbeständigen Material und erfüllen mehrere Funktionen gleichzeitig, wie im Zusammenhang mit Fig. 5 beschrieben. Sie dienen als elastische Dichtelemente, als druckübertragende Elemente zwischen den Prozessanschlüssen und der Messmembran sowie als mechanische Entkopplungskomponenten, die verhindern, dass Gehäusespannungen oder Montagetoleranzen auf die Messmembran übertragen werden. Beide Weichkomponentenmembranen 812, 814 sind zwischen den Anschlussadaptern und dem Gehäuse angeordnet und bilden gemeinsam mit dem Gehäuse die beiden hermetisch getrennten Druckräume aus.

Auf der oberen Seite ist ein erster Anschlussadapter 818 dargestellt, der über einen ersten Druckanschluss 820 mit einem Prozessdruck beaufschlagt wird. Der Anschlussadapter 818 dient sowohl als fluidischer Prozessanschluss als auch als Fixierung der ersten Weichkomponentenmembran 812. Auf der gegenüberliegenden Seite befindet sich ein zweiter Anschlussadapter 822, der über einen zweiten Druckanschluss 824 mit einem weiteren Prozessdruck beaufschlagt werden kann. Die beiden Anschlussadapter ermöglichen somit den Anschluss zweier voneinander unabhängiger Druckquellen, wie dies insbesondere für die Differenzdruckmessung erforderlich ist.

Zwischen dem Gehäuse 816 und den beiden Anschlussadaptern 818, 822 befinden sich eine erste Anschlussadapterdichtung 830 sowie eine zweite Anschlussadapterdichtung 832, die sicherstellen, dass kein Medium zwischen Gehäuse und Adapter austreten kann und jede Druckseite hermetisch von der Umgebung getrennt bleibt. Zusätzlich sind eine erste radiale Abdichtung 834 der ersten Weichkomponentenmembran 812 und eine zweite radiale Abdichtung 836 der zweiten Weichkomponentenmembran 814 vorgesehen, die eine interne Trennung der beiden Druckräume gewährleisten und verhindern, dass Druckmedium aus dem einen Druckraum in den jeweils anderen übertritt. Dies ist insbesondere für die Genauigkeit und Betriebssicherheit der Druckmessung von zentraler Bedeutung.

Die beiden Anschlussadapter 818, 822 werden über erste Anschlussadapterhalte-Elemente 838 und zweite Anschlussadapterhalte-Elemente 840 axial und/oder radial im Gehäuse gehalten. Bei diesen Halteelementen 838, 840 kann es sich beispielsweise um Sprengringe, Sicherungsklammern, Gewinderinge oder formschlüssige Raststrukturen handeln. Sie verhindern ein axiales Herauswandern der Adapter 818, 822, insbesondere bei dynamischen Druckstößen oder pulsierenden Drücken, und stellen zudem sicher, dass die Weichkomponentenmembranen 812, 814 dauerhaft in der vorgesehenen Position verbleiben.

Neben dem Sensorelement 104 ist auf der Messmembran 800 ist eine Elektronik 826 angeordnet, die mit dem Sensorelement 104 elektrisch verbunden ist. Die Elektronik 826 übernimmt die Signalaufbereitung, Linearisierung, Temperaturkompensation und gegebenenfalls die digitale Ausgabe der Messwerte. Die direkte Integration der Elektronik 826 in unmittelbarer Nähe des Sensorelements 104 ermöglicht kurze Signalwege, geringe elektromagnetische Störeinflüsse und eine hohe Messstabilität. Die Elektronik kann mit verschiedenen Kommunikationsmitteln zur Übertragung der Signale, wie beispielsweise Bluetooth, WLAN oder andere Funkprotokolle ausgestattet sein. Alternative oder in Ergänzung dazu können auch Steckverbindungen zur Datenübertragung und oder Stromversorgung vorgesehen sein. Des Weiteren können auch Energieversorgungselemente wie Batterie und/oder Vorrichtungen zum Laden, inklusive des induktionsbasierten, kabellosen Ladens vorgesehen sein. Die Achse A 108 fungiert als geometrische Referenzachse für die Ausrichtung von Messmembran, Weichkomponentenmembranen und Prozessanschlüssen.

Durch die Kombination aus Messmembran 200, Weichkomponentenmembranen 812, 814, axialen und radialen Abdichtungen, modularer Anschlussadaptertechnik, Halteelementen und integrierter Elektronik 826 ergibt sich eine kompakte, robuste und hochpräzise Ausführungsform eines Druckdifferenzsensors. Diese Ausführungsform eignet sich insbesondere für die Differenzdruckmessung, für Absolutdruckanwendungen mit Referenzraum, für bidirektionale Druckmessungen sowie für Anwendungen mit hohen Anforderungen an Dichtheit, Medienbeständigkeit und mechanische Stabilität. Die axiale Montage erlaubt zudem eine besonders kompakte Bauform, die in engen oder strömungsoptimierten Installationsräumen von Vorteil ist.

## Patentansprüche

1. Differenzdrucksensor zur Erfassung eines Druckunterschieds zwischen einem ersten in einem ersten Fluidanstandsbereich einer Messmembran anstehenden Fluid und einem zweiten in einem zweiten Fluidanstandsbereich der Messmembran anstehenden Fluid, umfassend: ein Gehäuse, mit
wenigstens einem ersten Anschlussbereich, zur Herstellung einer Fluidverbindung mit einem das erste Fluid aufweisende fluidführenden System, und
einem Aufnahmebereich welcher die Messmembran an einem Lagerbereich wenigstens abschnittsweise einfasst,
wenigstens ein Sensorelement, das mit der Messmembran gekoppelt ist, um bei einer Verformung der Messmembran ein elektrisches Messsignal auszugeben,
**dadurch gekennzeichnet, dass**
das Sensorelement in einem Bereich außerhalb des ersten oder des zweiten Fluidanstandsbereichs mit der Messmembran gekoppelt ist.

2. Differenzdrucksensor nach Anspruch 1,
**dadurch gekennzeichnet, dass**
das Gehäuse einen zweiten Anschlussbereich, zur Herstellung einer Fluidverbindung mit einem das zweiten Fluid aufweisende fluidführenden System aufweist.

3. Differenzdrucksensor nach Anspruch 1 oder 2,
**dadurch gekennzeichnet, dass**
das wenigstens eine Sensorelement aus einer Gruppe ausgewählt ist, die resistive Elemente, kapazitive Elemente, piezoelektrische Elemente, Dehnungsmessstreifen, Hallsensoren und dergleichen umfasst.

4. Differenzdrucksensor nach einem der vorhergehenden Ansprüche,
**dadurch gekennzeichnet, dass**
die Membran aus einem metallischen, keramischen oder polymeren Werkstoff mit vorgegebener Elastizität besteht.

5. Differenzdrucksensor nach einem der vorhergehenden Ansprüche,
**dadurch gekennzeichnet, dass**
die Messmembran einen Rahmenbereich aufweist.

6. Differenzdrucksensor nach Anspruch 5,
**dadurch gekennzeichnet, dass**
die Messmembran einen druckbelasteten Bereich aufweist, der auf einer ersten Seite den ersten Fluidanstandsbereich und auf einer gegenüberliegenden zweiten Seite den zweiten Fluidanstandsbereich bildet, wobei der druckbelastete Bereich über mindestens einen Verbindungsbereich mit dem Rahmenbereich verbunden ist.

7. Differenzdrucksensor nach Anspruch 6,
**dadurch gekennzeichnet, dass**
der druckbelastete Bereich mit Ausnahme des wenigsten einen Verbindungsbereichs vom Rahmenbereich getrennt ist.

8. Differenzdrucksensor nach wenigstens einem der Ansprüche 6 oder 7,
**dadurch gekennzeichnet, dass**
der Verbindungsbereich sich in den Aufnahmebereich hinein und/oder durch diesen hindurch erstreckt.

9. Differenzdrucksensor nach wenigstens einem der Ansprüche 6 bis 8,
**dadurch gekennzeichnet, dass**
der Verbindungsbereich steg- oder balkenförmig ausgeführt ist

10. Differenzdrucksensor nach einem der vorhergehenden Ansprüche,
**dadurch gekennzeichnet, dass**
die Messmembran zusammen mit wenigstens einem Abschnitt des Gehäuses den ersten und/oder den zweiten Anschlussbereich gegenüber dem Sensorelement fluiddicht trennt, und, optional, dass zwischen Abschnitt und Messmembran ein Dichtelement angeordnet ist.

11. Differenzdrucksensor nach einem der vorhergehenden Ansprüche,
**dadurch gekennzeichnet, dass**
das Sensorelement an einem Randbereich des Rahmenbereichs oder Verbindungsbereich der Messmembran angebracht ist.

12. Differenzdrucksensor nach einem der vorhergehenden Ansprüche,
**dadurch gekennzeichnet, dass**
der erste und/oder zweite Fluidanstandsbereich mit einer Weichkomponentenmembran überdeckt ist.

13. Differenzdrucksensor nach Anspruch 13,
**dadurch gekennzeichnet, dass**
die Weichkomponentenmembran einen Gehäuseinnenraum zwischen Messmembran und dem wenigsten ersten Anschlussbereich überdeckt.

14. Differenzdrucksensor nach einem der Ansprüche 13 oder 14,
**dadurch gekennzeichnet, dass**
die Weichkomponentenmembran wenigstens abschnittsweise balgförmig ausgestaltet ist und/oder die Weichkomponentenmembran wenigstens eine radiale Lippendichtung aufweist.

15. Differenzdrucksensor nach einem der vorhergehenden Ansprüche,
**dadurch gekennzeichnet, dass**
das erste Fluid und oder das zweite Fluid eine Flüssigkeit ist.
